# EUROPÄISCHE PATENTSCHRIFT

(11) **EP 0 863 930 B1**
(45) Veröffentlichungstag und Bekanntmachung des Hinweises auf die Patenterteilung: **21.07.2004**
(21) Anmeldenummer: 97938737.0
(22) Anmeldetag: 18.09.1997
(51) Int. Cl.: C08G 18/79, C08G 18/80, C08G 18/70, C09D 175/04, C09J 175/04, C09K 3/10

(54) **VERFAHREN ZUR HERSTELLUNG VON LAGERSTABILEN DISPERSIONEN EINES VERKAPSELTEN POLYISOCYANATES UND DEREN VERWENDUNG**
PROCESS FOR PRODUCING DISPERSIONS OF ENCAPSULATED POLYISOCYANATES WHICH REMAIN STABLE IN STORAGE AND THEIR USE
PROCEDE POUR PRODUIRE DES DISPERSIONS DE POLYISOCYANATES ENCAPSULES STABLES AU STOCKAGE ET UTILISATION DE CES DISPERSIONS

(30) Priorität: 27.09.1996 CH 237296
(43) Veröffentlichungstag der Anmeldung: 16.09.1998
(73) Patentinhaber: Dow Automotive AG, 8807 Freienbach (CH)
(72) Erfinder: ROHRER, Paul, CH-8704 Herrliberg (CH); SCHNEIDER, Daniel, CH-8804 Au (CH)
(74) Vertreter: Patentanwälte Schaad, Balass, Menzl & Partner AG
(86) Internationale Anmeldenummer: PCT/CH1997/000350
(87) Internationale Veröffentlichungsnummer: WO 1998/013406

(56) Entgegenhaltungen:
- EP-A- 0 062 780

## Beschreibung

Die Erfindung betrifft:
- Verfahren zur Herstellung von lagerstabilen Dispersionen eines verkapselten Polyisocyanates, wie sie in den Ansprüchen 1 bis 21 umschreiben sind; und
- Verwendungen der so erhaltenen lagerstabilen Dispersionen, wie sie in den Ansprüchen 22 bis 25 umschrieben sind.

Die Dimerisierung von aromatischen und aliphatischen Diisocyanaten zu Uretdionen ist seit langem bekannt, und die erhaltenen Dimeren werden beispielsweise für die Herstellung von hitzereaktiven Pulverlacken verwendet (z.B. DE-A1-23 12 391). Die Dimerisierung erfolgt im allgemeinen in Lösungsmitteln oder aber in Masse, wobei u.a. substituierte Pyridine, Trialkylphosphine, Trialkylphosphite und Imidazole als Katalysatoren verwendet werden.

Das Verfahren wird beispielsweise beschrieben in: G. W. Becker und D. Braun, Kunststoff-Handbuch, Band 7, "Polyurethane", 2. Auflage, ISBN 3-446-13614-2, Seite 80.

Die Herstellung von lagerstabilen Polyisocyanaten, welche in Verbindungen mit Zerewitinoff-aktivem Wasserstoff dispergiert sind, durch oberflächliche Polyaddukt-Bildung auf festen hochschmelzenden Polyisocyanaten ist ebenfalls aus zahlreichen Veröffentlichungen bekannt (u.a. DE-A1-31 12 054, DE-A1-32 28 723, DE-A1-32 30 757, DE-A1-34 03 499, DE-A1-37 24 555; EP-A2-0 402 726 und EP-A1-0 402 728).

Als feste Polyisocyanate werden vorzugsweise die Uretdion-Dimeren oder die Harnstoff-Dimeren von Methylendiphenyldiisocyanat (MDI) und Toluylendiisocyanat (TDI) verwendet.

Das feste Diisocyanat kann auch durch Umsetzung mit einem Polyol modifiziert sein, wie dies z.B. in DE-A1-38 26 447 beschrieben wird.

Die sogenannte Verkapselung der festen Diisocyanate kann in einem inerten Medium oder direkt in den Wasserstoff-aktiven Komponenten erfolgen, sofern das zur Polyadduktbildung verwendete aliphatische oder cycloaliphatische Amin vor der Zugabe des Polyisocyanates vorgelegt wird (z.B. DE-A1-33 43 124).

Im Stand der Technik betreffend verkapselte feste Diisocyanate, welcher durch etwa 30 Patentveröffentlichungen repräsentiert wird, findet sich kein konkreter Hinweis dafür, dass es möglich wäre, eine Dispersion aus durch Adduktbildung mit primären Aminen verkapselten festen Diisocyanaten direkt aus einem monomeren flüssigen Diisocyanat durch Dimerisierung und anschliessende Verkapselung herzustellen.

Zwar erwähnt EP-A1-0 148 462 ein sogenanntes *in-situ*-Verfahren für die Dimerisierung von aromatischen Diisocyanaten in Polyolen mit Wasser zum Harnstoff-Dimeren, ohne dass das Polyol in wesentlichem Ausmasse mit dem Isocyanat reagiert, aber es findet sich sogar für diese sehr spezifisch und vollständig ablaufende Dimerisierungsreaktion kein Hinweis darauf, dass im selben Prozess noch eine Verkapselung der festen Diisocyanat-Produkte moglich wäre.

Für die Herstellung lagerstabilisierter Isocyanat-Dispersionen wird gemäss dem kurzesten Verfahren des Standes der Technik (z.B. EP-A1-0 671 423) das pulverförmige feste feinteilige Diisocyanat im Polyetherpolyol, in welchem das primäre Amin vorgelegt ist, zu einer sogenannten Härterpaste dispergiert. Diese Harterpaste wird dann der Herstellung der Polyurethan-Reaktivmasse als letzter Rezepturbestandteil zugesetzt.

Die letztgenannte Veröffentlichung erwähnt zwar die prinzipielle Möglichkeit, allenfalls die Diisocyanate *in situ* in Weichmachern, Lösungsmitteln, Wasser oder Polyolen zu dimerisieren und gegebenenfalls in dieser Form der Stabilisierung zu unterwerfen. Sie macht diese Möglichkeit jedoch nicht glaubhaft, da diese weder weiter erläutert oder in den Beispielen dokumentiert noch in den Patentansprüchen beansprucht wird. Dies ist nicht verwunderlich, da beim Vorgehen nach den Angaben des Standes der Technik kein stabiles Produkt erhalten wird. Es finden sich auch keine Hinweise, welche es dem Fachmann erlauben würden, daraus ein dazu geeignetes Verfahren abzuleiten.

Aufgabe der vorliegenden Erfindung war nun die Schaffung eines Verfahrens zur Herstellung von lagerstabilen Dispersionen von durch Adduktbildung mit primären aliphatischen Aminen verkapseltem Toluylendiisocyanat-uretdion, welches sich als Eintopfverfahren durchführen lässt.

Diese Aufgabe wird gelost durch die im kennzeichnenden Teil des Patentanspruches 1 definierten Massnahmen.

Die erfindungsgemass hergestellten Dispersionen aus *in-situ* verkapseltem Polyisocyanat können mit weiteren Wasserstoff-aktiven Verbindungen, wie Polyolen, und gegebenenfalls weiteren Polyaminen von niedrigem Molekulargewicht (sogenannten Kettenverlängern oder Vernetzern) und hohem Molekulargewicht vermischt werden, um so zu spezifischen Eigenschaften der ausgeharteten Polyurethane zu gelangen.

Dies ist jedoch nicht unbedingt erforderlich, da diese Systeme, insbesondere wenn sie in Polyolen als Dimerisierungsmedium hergestellt werden, vollwertige warmereaktive Systeme zur Herstellung von Polyurethanen darstellen.

Bei einer besonderen Ausfuhrungsform konnen die erfindungsgemass hergestellten Dispersionen auch mit Füllstoffen, Kettenverlängern, gegebenenfalls mit festen Polymeren mit Schmelzpunkten bis zu 80 °C und weiteren üblichen Zusatzstoffen, wie Katalysatoren, zusammen zu lagerstabilen Klebstoff-Zusammensetzungen formuliert werden. Dies konnte auf Grund der Literaturangaben, insbesondere der DE-A1-37 27 128, nicht erwartet werden. Die letztgenannte Veröffentlichung behandelt die Schwierigkeit, zusammen mit Füllstoffen, und gegebenenfalls mit festen Zusatzstoffen, lagerstabile und pumpbare Zubereitungen zu erhalten. Das Problem wurde dort so gelöst, dass die Füllstoffe mit Polyolen und Polyaminen zu einer separaten zweiten Komponente formuliert werden, welche erst kurz vor der Verwendung zugemischt wird.

Beim erfindungsgemässen Verfahren bringt man das Toluoldiisocyanat zweckmässig in einem bezüglich der Isocyanat-Reaktion inerten Medium zur Reaktion, insbesondere in einem Weichmacher von mässiger Polarität, und vorzugsweise in einem Phthalatweichmacher auf der Basis von mindestens einem Alkohol mit 8 bis 12 Kohlenstoffatomen.

Es können auch andere Weichmacher eingesetzt werden, wie sie für pastenförmige und spritzbare Polyurethan-Fromulierungen üblich sind, vorausgesetzt dass Polarität und Lösungsvermögen, ausgedrückt als Löslichkeitsparameter δ, nicht über 10, vorzugsweise nicht über 9, liegt.

Wird die Umsetzung in einem Polyol durchgeführt, verwendet man zweckmässigerweise ein solches mit einem Molekulargewicht von 500 bis 20'000, vorzugsweise ein Polyol, welches ausschliesslich sekundäre Hydroxy-Gruppen aufweist, und insbesondere ein Polyetherpolyol auf der Basis von Propylenoxyd.

Zweckmässigerweise führt man die Umsetzung des Toluoldiisocyanates bei Temperaturen unterhalb 20 °C durch, vorzugsweise bei Temperaturen unterhalb 15 °C.

Die Desaktivierung des Dimerisierungskatalysators führt man zweckmässigerweise mittels Benzoylchlorid durch.

Als primäres Monoamin setzt man zweckmässigerweise ein solches mit 4 bis 18 Kohlenstoffatomen ein, vorzugsweise ein solches mit 6 bis 12 Kohlenstoffatomen, und insbesondere n-Octylamin.

Als primäres aliphatisches Polyamin setzt man zweckmässigerweise zum überwiegenden Teil ein Triamin auf der Basis von Polyoxyethylen mit einem Molekulargewicht von etwa 400, wie z.B. Jeffamin T-403 (Firma Air Products), ein, falls eine rasche Aushärtung erwünscht ist. Es können aber zusätzlich oder alternativ aliphatische Diamine mit einem Molekulargewicht von 50 bis 500, vorzugsweise von 80 bis 200, verwendet werden.

Als solche aliphatische Diamine können beispielsweise folgende Verbindungen eingesetzt werden: unsubstituiertes oder 3,3'-Dimethlyl-substituiertes 4,4'-Diaminodicyclohexylmethan, Isophorondiamin, Diamino-m-xylol, 1,2-Diaminocyclohexan, Neopentandiamin, 2-Methyl-1,5-diaminopentan, Jeffamin D-400.

Vorzugsweise setzt man bei der Durchführung des Verfahrens in Polyol als Reaktionsmedium während der Umsetzung zusätzlich ein kurzkettiges aliphatisches Diamin, insbesondere Ethylendiamin, zu.

Am Schluss gibt man zweckmässigerweise zusätzlich ein langkettiges Polyamin zu. Dabei wird vorzugsweise ein Di- oder Triamin auf Basis von Polyoxyethylen mit einem Molekulargewicht von mehr als 1000, insbesondere von mehr als 3000 verwendet, wie sie von der Firma Air Products unter dem Markennamen Jeffamine mit unterschiedlichen Kettenlängen und Molekulargewichten erhältlich sind. Es können aber auch Polyamid-Polymere, z.B. von der Firma Schering, im oben erwähnten Molekulargewichts-Bereich verwendet werden.

Die erfindungsgemäss erhaltenen Dispersionen eignen sich insbesondere zur Herstellung von lagerstabilen hitzehärtbaren Polyurethan- Klebstoffen oder Polyurethan-Dichtstoffen oder lagerstabilen hitzehärtbaren Polyurethan-Beschichtungsmassen. Dazu können die erhaltenen Dispersionen mit mindestens einem (weiteren) Polyol und/oder Polyamin mit je einem Molekulargewicht von 1000 bis 20'000 vermischt werden, zweckmässigerweise unter Zugabe mindestens eines Katalysators für die Polyurethan-Reaktion. Weiter können ausserdem Füllstoffe und/oder Additive, z.B. UV-Stabilisatoren, Haftverbesserer, wie Silane, Trocknungsmittel, wie Molekularsiebe, oder Rheologiehilfsmittel, wie amorphe synthetische Kieselsäure, zugegeben werden.

Als Polyol setzt man dabei zweckmässig einen Polyester und/oder einen Polyether und/oder ein Polycarbonat und/oder ein Polyurethan und/oder Polybutadien und als Polyamin ein Polyoxyethylen-Polyamin ein. Die Funktionalität dieser Polyole und Polyamine kann dabei zwischen 2 bis 4, vorzugsweise 2 bis 3, liegen.

### Beispiel 1

### [In-situ-Verfahren in inertem Medium]

In einen 1000-ml-Glasreaktor mit Stickstoffanschluss wurden 643,4 g eines Dinonylphtalat-Weichmachers und 160,5 g 95%iges Toluylen-2,4-diisocyanat eingewogen und während 5 Minuten homogenisiert und auf 15 °C gekühlt.

Anschliessend wurden 3,7 g Tributylphosphin als Katalysator zugegeben, und das ganze Gemisch wurde unter starkem Rühren bei 15°C 1 Stunde lang zur Reaktion gebracht. Danach wurden 3,7 g Benzoylchlorid zugeben und 15 Minuten bei 15 °C zur Reaktion gebracht. Das Gemisch wurde nun mit 22,6 g Octylamin versetzt und bei 15 °C 10 Minuten lang zur Reaktion gebracht. Dann wurden dem Gemisch 77,1 g Jeffamin T-403 zugeben und bei 15 °C 45 Minuten lang zur Reaktion gebracht. Zum Schluss wurden dem Gemisch 89,0 g Jeffamin T-5000 zugeben und während 20 Minuten bei 15 °C gerührt.

Das *in situ* mikroverkapselte Polyisocyanat wurde nun entgast und in einem geschlossenen Behälter aufbewahrt. Es war ohne Stickstoffüberlagerung mehrere Wochen stabil. Im DSC (Differential Scanning Calorimeter) zeigte es einen exothermen Peak bei 110 °C.

### Beispiel 2

### [In-situ-Verfahren in Propylenoxid-Diol]

In einen 1000-ml-Glasreaktor mit Stickstoffanschluss wurden 600,0 g eines Propylenoxid-Diols mit einem Molekulargewicht von 2000 und einer OH-Zahl von 57 und 178,0 g 95%iges Toluylen-2,4-diisocyanat eingewogen und während 5 Minuten homogenisiert und auf 15°C gekühlt.

Anschliessend wurden 4,0 g Tributylphosphin als Katalysator zugegeben und das ganze Gemisch unter starkem Rühren bei 15 °C 1 Stunde lang zur Reaktion gebracht. Danach wurden 2,8 g Benzoylchlorid zugeben und 10 Minuten bei 15 °C zur Reaktion gebracht. Das Gemisch wurde nun mit 25,0 g Octylamin versetzt und bei 15 °C 15 Minuten lang zur Reaktion gebracht. Dann wurden dem Gemisch 85,4 g Jeffamin T-403 zugeben und bei 15 °C 30 Minuten lang zur Reaktion gebracht. Anschliessend wurden dem Gemisch 3,3 g Ethylendiamin zugegeben und bei 15 °C 30 Minuten lang zur Reaktion gebracht. Zum Schluss wurden dem Gemisch 101,5 g Jeffamin T-5000 zugeben und während 10 Minuten bei 15 °C gerührt.

Das in situ mikroverkapselte Polyisocyanat wurde nun entgast und in einem geschlossenen Behälter aufbewahrt. Es war ohne Stickstoffüberlagerung mehrere Wochen stabil. Im DSC (Different Scanning Calorimeter) zeigte es einen exothermen Peak bei 125 °C.

### Beispiel 3

### [In-situ-Verfahren in Propylenoxid-Triol]

In einem 1000-ml-Glasreaktor mit Stickstoffanschluss wurden 700 g eines Polyethertriols auf Propylenoxid-Basis mit einem Molekulargewicht von etwa 4500 und einer OH-Zahl von 37 und 140,0 g 95%iges Toluylen-2,4-diisocyanat und 8,8 g Antaron V-216, ein Dispergator auf der Basis eines Homopolymers aus 1-Ethenylhexadecyl-2-pyrrolidon (Firma ISP Technologies) mit einem Molekulargewicht von 7300, eingewogen und während 5 Minuten homogenisiert und auf 15 °C gekühlt.

Anschliessend wurden 3,0 g Tributylphosphin als Katalysator zugegeben und das ganze Gemisch unter starkem Rühren bei 15 °C 1 Stunde lang zur Reaktion gebracht. Danach wurden 2,5 g Benzoylchlorid zugeben und 15 Minuten bei 15 °C zur Reaktion gebracht. Das Gemisch wurde nun mit 19,7 g Octylamin versetzt und bei 15 °C 5 Minuten lang zur Reaktion gebracht. Dann wurden dem Gemisch 67,2 g Jeffamin T-403 zugeben und bei 15 °C 15 Minuten lang zur Reaktion gebracht. Anschliessend wurden dem Gemisch 2,5 g Ethylendiamin zugegeben und bei 15 °C 15 Minuten lang zur Reaktion gebracht. Zum Schluss wurden dem Gemisch 56,2 g Jeffamin T-5000 zugeben und während 10 Minuten bei 15 °C gerührt.

Das in situ mikroverkapselte Polyisocyanat wurde nun entgast und in einem geschlossenen Behälter aufbewahrt. Es war ohne Stickstoffüberlagerung mehrere Wochen stabil. Im DSC (Different Scanning Calorimeter) zeigte es einen exothermen Peak bei 119 °C.

### Beispiel 4

### [In-situ-Verfahren in Propylenoxid-Diol/Triol]

In einen 1000 ml-Glasreaktor mit Stickstoffanschluss wurden 210,6 g eines Polyethertriols auf Propylenoxid-Basis mit einem Molekulargewicht von 6000 (hohe Funktionalität von 2,9) und 430,0 g eines Propylenoxid-Diols mit einem Molekulargewicht von 2000 (Funktionalität von 1,9) sowie 159,1 g 95%iges Toluylen-2,4-diisocyanat, 5,9 g Antaron V-216 (Firma ISP Technologies) und ein Dispergator auf der Basis eines Homopolymers aus 1-Ethenylhexadecyl-2-pyrrolidon mit einem Molekulargewicht von 7300 (Firma ISP Technologies) eingewogen und während 5 Minuten homogenisiert und auf 15 °C gekühlt.

Anschliessend wurden 3,7 g Tributylphosphin als Katalysator zugegeben, und das ganze Gemisch wurde unter starkem Rühren bei 15 °C 1 Stunde lang zur Reaktion gebracht. Danach wurden 3,7 g Benzoylchlorid zugeben und wiederum 15 Minuten bei 15 °C zur Reaktion gebracht. Das Gemisch wurde nun mit 22,4 g Octylamin versetzt und wiederum bei 15 °C 15 Minuten lang zur Reaktion gebracht. Dann wurden dem Gemisch 76,4 g Jeffamin T-403 zugeben und bei 15 °C 45 Minuten lang zur Reaktion gebracht. Anschliessend wurden dem Gemisch 2,9 g Ethylendiamin zugegeben und bei 15 °C 45 Minuten lang zur Reaktion gebracht. Zum Schluss wurden dem Gemisch 85,3 g Jeffamin T-5000 zugeben, und es wurde während 20 Minuten bei 15 °C gerührt.

Das in situ mikroverkapselte Polyisocyanat wurde nun entgast und in einem geschlossenen Behälter aufbewahrt. Es war ohne Stickstoffüberlagerung mehrere Wochen stabil. Im Different Scanning Calorimeter zeigte es einen exothermen Peak bei 126 °C.

### Beispiel 5

### [In-situ-Verfahren in inertem Medium, inkl. Prepolymer]

In einem 1000-ml-Glasreaktor mit Stickstoffanschluss wurden 328,0 g eines Dinonylphtalat-Weichmachers und 84,0 g 95%iges Toluylen-2,4-diisocyanat eingewogen und während 5 Minuten homogenisiert und auf 15 °C gekühlt.

Anschliessend wurden 1,9 g Tributylphosphin als Katalysator zugegeben, und das ganze Gemisch wurde unter starkem Rühren bei 15 °C 1 Stunde lang zur Reaktion gebracht. Danach wurden 1,9 g Benzoylchlorid zugeben und 5 Minuten bei 15 °C zur Reaktion gebracht. Das Gemisch wurde nun mit 11,2 g Octylamin versetzt und bei 15 °C 5 Minuten lang zur Reaktion gebracht. Dann wurden dem Gemisch 36 g Jeffamin T-403 zugeben und bei 15 °C 60 Minuten lang zur Reaktion gebracht. Danach wurden dem Gemisch 202,0 g eines OH-terminierten Polyurethan-Prepolymers mit einem Val-Gew. von 3000 (auf der Basis eines Triols mit einem Molekulargewicht von 3000 und eines Diols mit einem Molekulargewicht von 2000 und 4,4'-Methylendi-(phenylisocyanat) (im Überschuss) zugegeben und während 20 Minuten bei 15 °C gemischt. Zum Schluss wurden 335 g Jeffamin T-5000 zugeben und während 10 Minuten bei 15 °C gemischt.

Das *in situ* mikroverkapselten Polyisocyanat wurde nun entgast und in einem geschlossenen Behälter aufbewahrt. Es war ohne Stickstoffüberlagerung mehrere Wochen stabil. Im DSC (Different Scanning Calorimeter) zeigte es einen exothermen Peak bei 96 °C.

### Beispiel 6

### [Vergleichsbeispiel: In-situ-Verfahrens in inertem Medium, ohne Octylamin)

In einem 1000-ml-Glasreaktor mit Stickstoffanschluss wurden 666,7 g eines Dinonylphtalat-Weichmachers und 157,9 g 95%iges Toluylen-2,4-diisocyanat eingewogen und während 5 Minuten homogenisiert und auf 15 °C gekühlt.

Anschliessend wurden 3,9 g Tributylphosphin als Katalysator zugegeben und das ganze Gemisch unter starkem Rühren bei 15 °C 1 Stunde lang zur Reaktion gebracht. Danach wurden 3,9 g Benzoylchlorid zugeben und 15 Minuten bei 15 °C zur Reaktion gebracht. Dann wurden dem Gemisch 69,6 g Jeffamin T-403 zugeben und bei 15 °C 45 Minuten lang zur Reaktion gebracht. Zum Schluss wurden dem Gemisch 98,0 g Jeffamin T-5000 zugeben. Das Produkt gelierte aus.

### Beispiel 7

### [Vergleichsbeispiel: In-situ-Verfahren in inertem Medium, ohne Benzoylchlorid]

In einem 1000-ml-Glasreaktor mit Stickstoffanschluss wurden 647,1 g eines Dinonylphtalat-Weichmachers und 160,5 g 95%iges Toluylen-2,4-diisocyanat eingewogen und während 5 Minuten homogenisiert und auf 15 °C gekühlt.

Anschliessend wurden 3,7 g Tributylphosphin als Katalysator zugegeben und das ganze Gemisch unter starkem Rühren bei 15 °C 1 Stunde lang zur Reaktion gebracht. Danach wurden 22,6 g Octylamin zugeben und 15 Minuten bei 10 °C zur Reaktion gebracht. Dann wurden dem Gemisch 77,1 g T-403 zugeben und bei 15 °C 45 Minuten lang zur Reaktion gebracht. Zum Schluss wurden dem Gemisch 89,0 g Jeffamin T-5000 zugeben. Das Produkt gelierte aus.

### Beispiel 8

### [Herstellung einer Klebstoffmasse]

In einen Labor-Planetenmischer wurden 133,0 g der in Beispiel 1 beschriebenen in situ hergestellten Polyisocyanat-Dispersion und 175,0 g eines Amin-terminierten Prepolymers mit einem Val-Gew. von 2600 (auf der Basis von Jeffaminen D-2000, T-5000 und Toluoldiisocyanat im Überschuss) eingewogen und während 5 Minuten bei 30 °C und 1013 mbar (101'300 Pa) gemischt. Danach wurde der Druck auf 20 mbar (2000 Pa) reduziert und 15 Minuten weitergemischt. Anschliessend wurde belüftet, und es wurden 21,0 g Russ sowie 17,5 g Kreide und 3,5 g Molekularsieb 3 A eingewogen und während 5 Minuten bei 30 °C und 1013 mbar (101'300 Pa) gemischt. Danach wurde der Druck auf 20 mbar (2000 Pa) reduziert und 15 Minuten weitergemischt.

Die so erhaltene Klebstoffmasse wurde in eine Kartusche abgefüllt. Der Klebstoff war auch nach einer Lagerung von mehreren Wochen noch pastos. Im DSC (Different Scanning Calorimeter) zeigte er einen exothermen Peak bei 91 °C.

### Beispiel 9

### [Herstellung einer Klebstoffmasse]

In einen Labor-Planetenmischer wurden 252,0 g der in Beispiel 2 beschriebenen in situ hergestellten Polyisocyanat-Dispersion und 59,5 g Russ eingewogen und während 5 Minuten bei 1013 mbar (101'300 Pa) und weitere 5 Minuten bei 20 mbar (2000 Pa) eingemischt. Anschliessend wurde belüftet, und es wurden 24,5 g Kreide, 3,5 g Molekularsieb 3 A und 7,0 g amorphe Kieselsaure eingewogen und während 5 Minuten bei 1013 mbar (101'300 Pa) gemischt. Danach wurde der Druck auf 20 mbar (2000 Pa) reduziert und 15 Minuten weitergemischt. Anschliessend wurden 3,5 g DBTL (Dibutyl-zinn-dilaurat) als Katalysator eingewogen und während 10 Minuten bei 20 mbar (2000 Pa) gemischt.

Die so erhaltene Klebstoffmasse wurde in eine Kartusche abgefüllt. Der Klebstoff war auch nach einer Lagerung von mehreren Wochen noch pastös. Im DSC (Different Scanning Calorimeter) zeigte er einen exothermen Peak bei 132 °C.

### Beispiel 10

### [Herstellung einer Klebstoffmasse]

In einen Labor-Planetenmischer wurden 259,0 g der in Beispiel 3 beschriebenen in situ hergestellten Polyisocyanat-Dispersion und 52,5 g Russ eingewogen und während 5 Minuten bei 1013 mbar (101'300 Pa) und weitere 5 Minuten bei 20 mbar (2000 Pa) eingemischt. Anschliessend wurde belüftet, und es wurden 24,5 g Kreide, 3,5 g Molekularsieb 3 A und 7,0 g amorphe Kieselsäure eingewogen und während 5 Minuten bei 1013 mbar (101'300 Pa) gemischt. Danach wurde der Druck auf 20 mbar (2000 Pa) reduziert und 15 Minuten weitergemischt. Anschliessend wurden 3,5 g DBTL (Dibutyl-zinn-dilaurat) als Katalysator eingewogen und während 10 Minuten bei 20 mbar (2000 Pa) gemischt.

Die so erhaltene Klebstoffmasse wurde in eine Kartusche abgefüllt. Der Klebstoff war auch nach einer Lagerung von mehreren Wochen noch pastös. Im DSC (Different Scanning Calorimeter) zeigte er einen exothermen Peak bei 120 °C.

Das Material wurde zwischen zwei mit Betaprime 5001 (Firma Gurit-Essex AG) grundierte Glasprüflinge in einer Schichtdicke von 2 mm 20 Minuten bei 140 °C ausgehärtet und nach dem Abkühlen einer Zugscherprüfung unterzogen. Es ergab sich eine Zugscherfestigkeit von 2,1 MPa. Nach einer Woche hatte sich die Zugscherfestigkeit auf 4,1 MPa erhöht.

### Beispiel 11

### [Herstellung einer Klebstoffmasse]

In einen Labor-Planetenmischer wurden 255,5 g der in Beispiel 4 beschriebenen *in situ* hergestellten Polyisocyanat-Masse und 56,0 g Russ eingewogen und während 5 Minuten bei 1013 mbar (101'300 Pa) und weitere 5 Minuten bei 20 mbar (2000 Pa) eingemischt. Anschliessend wurde belüftet, und es wurden 24,5 g Kreide, 5 g Molekularsieb 3 A und 7,0 g amorphe Kieselsäure eingewogen und während 5 Minuten bei 1013 mbar (101'300 Pa) gemischt. Danach wurde der Druck auf 20 mbar (2000 Pa) reduziert und 15 Minuten weitergemischt. Anschliessend wurden 3,5 g DBTL (Dibutyl-zinn-dilaurat) als Katalysator eingewogen und während 10 Minuten bei 20 mbar (2000 Pa) gemischt.

Die so erhaltene Klebstoffmasse wurde in eine Kartusche abgefüllt. Der Klebstoff war auch nach einer Lagerung von mehreren Wochen noch pastös. Im DSC (Different Scanning Calorimeter) zeigte es einen exothermen Peak bei 128 C.

Der Klebstoff wurde zwischen zwei überlappende Prüfbleche mit einer KTL-Grundierung (kataphoretische Tauchlackierung) auf einer Fläche von 1,2 x 2,5 cm gleichmässig zu einer Schichtdicke von 1 mm verteilt und 30 Sekunden in einer Induktionsspule auf max. 160 °C erhitzt. Darauf wurde der Prüfkörper mit einem Gewicht von 18 kg belastet, ohne dass die Klebefuge riss.

Der Klebstoff wurde zwischen zwei mit Primer (Betaprime VP 1706 der Firma Gurit-Essex AG) grundierte Prüfbleche aus Aluminium in einer Schichtdicke von 2 mm gebracht. Es wurde 30 Minuten bei 140 °C ausgehärtet. Nach einem Tag betrug die Zugscherfestigkeit 3,0 MPa, nach 7 Tagen 6,3 MPa.

### Beispiel 12

### [Herstellung einer Klebstoffmasse]

In einen Labor-Planetenmischer wurden 300 g der in Beispiel 5 beschriebenen in situ hergestellten Polyisocyanat-Masse und 25 g Russ eingewogen und während 5 Minuten bei 20 mbar (2000 Pa) eingemischt. Anschliessend wurde belüftet, und es wurden 20,0 g Kreide und 5 g Molekularsieb 3A im Verlauf von 5 Minuten bei 20 °C und 1013 mbar (101'300 Pa) zugemischt. Danach wurde der Druck auf 20 mbar (2000 Pa) reduziert und 15 Minuten weitergemischt.

Die so erhaltene Klebstoffmasse wurde in eine Kartusche abgefüllt. Der Klebstoff war auch nach einer Lagerung von mehreren Wochen noch pastös. Im DSC (Different Scanning Calorimeter) zeigte es einen exothermen Peak bei 81 °C.

Der Klebstoff wurde zwischen zwei, aus SMC (Sheet Molding Compound) hergestellten, sich überlappenden Zugscherprüfkörpern, auf einer Fläche von 1,2 x 2,5 cm, gleichmässig aufgetragen und 1 Minuten im Hochfrequenzfeld erhitzt. Im Anschluss wurde der Prüfkörper eingespannt und mit 12 kg belastet. Die Klebung bestand diese Prüfung bis zu ihrem Abbruch nach mehr als eine Stunde.

### Beispiel 13

### [In-situ-Verfahren in Propylenoxid-Diol/Triol. Fügbar nach Aktivierung]

In einem 1000-ml-Glasreaktor mit Stickstoffanschluss wurden 207,2 g eines Polyethertriols auf Propylenoxid-Basis mit einem Molekulargewicht von 6000 und 423,7 g eines Propylenoxid-Diols mit einem Molekulargewicht von 2000 sowie 171,8 g 100%iges Toluylen-2,4-diisocyanat, 5,9 g Antron V-216 und ein Dispergator auf der Basis eines Homopolymers aus 1-Ethenylhexadecyl-2-pyrrolidon mit einem Molekulargewicht von 7300 (Firma ISP Technologies) eingewogen und während 5 Minuten homogenisiert und auf 15 °C gekühlt.

Anschliessend wurden 3,6 g Tributylphosphin als Katalysator zugegeben, und das ganze Gemisch wurde unter starkem Rühren bei 15 °C 1 Stunde lang zur Reaktion gebracht. Danach wurden 3,6 g Benzoylchlorid zugegeben und wiederum 15 Minuten bei 15 °C zur Reaktion gebracht. Das Gemisch wurde dann mit 22,1 g Octylamin versetzt und wiederum bei 15 °C 15 Minuten lang zur Reaktion gebracht. Dann wurden dem Gemisch 75,2 g Neopentan-Mix (67,1 % eines Di-nonylphtalat-Weichmachers und 32,9 % 2,2-Dimethyl-1,3-diaminopropan) zugegeben und bei 15 °C 15 Minuten lang zur Reaktion gebracht. Anschliessend wurden dem Gemisch 2,9 g Ethylendiamin zugegeben und bei 15 °C 15 Minuten lang zur Reaktion gebracht. Zum Schluss wurden dem Gemisch 84,0 g Jeffamin T-5000 zugegeben und während 20 Minuten bei 15 °C gerührt.

Das in situ mikroverkapselte Polyisocyanat wurde nun entgast und in einem geschlossenen Behälter aufbewahrt. Es war ohne Stickstoffüberlagerung mehrere Wochen stabil. Im DSC (Different Scanning Calorimeter) zeigte es einen exothermen Peak bei 138 °C.

### Beispiel 14

### [Aktivierung des in Beispiel 13 beschriebenen Produktes]

Die Mischung aus Beispiel 13 wurde auf einem Prüfblech auf einer Fläche von 1,2 x 2,5 cm in einer Schichtdicke von 2 mm gleichmässig aufgetragen und während 5 Minuten bei 140 °C aktiviert. Nach 4 Stunden wurde ein zweites Prüfblech auf den Kleber aufgebracht. Nach einer Woche war der Prüfling vollständig ausgehärtet.

### Beispiel 15

### [Herstellung einer Klebstoffmasse aus der in Beispiel 13 beschriebenen Reaktionsmasse]

In einem Labor-Planetenmischer wurden 306,7 g der im Beispiel 13 beschriebenen in situ hergestellten Polyisocyanat-Masse eingewogen und während 15 Minuten bei 1013 mbar (101'300 Pa) auf 80 °C erhitzt. Anschliessend wurden 9,1 g hochdisperse Kieselsäure, 3,2 g Russ und 30,8 g bei 80 °C geschmolzener Polyester (Dynacoll 7360) eingewogen. Anschliessend wurde während 5 Minuten bei 1013 mbar (101'300 Pa) und 80°C gemischt. Unter leichtem Rühren wurde die Mischung bei 1013 mbar (101'300 Pa) auf 50 °C gekühlt . Danach wurde der Druck auf 20 mbar (2'000 Pa) reduziert, und es wurde 15 Minuten weitergemischt. Anschliessend wurden 0,4 g DBTL (Dibutyl-zinn-dilaurat) als Katalysator eingewogen, und es wurde während 10 Minuten bei 20 mbar (2'000 Pa) gemischt.

Die so erhaltene Klebstoffmasse wurde in eine Kartusche abgefüllt. Der Klebstoff war auch nach einer Lagerung von mehreren Wochen noch pastös. Im DSC (Different Scanning Calorimeter) zeigte er einen exothermen Peak bei 130°C.

### Beispiel 16

### [In-situ-Verfahren in Propylenoxid-Diol/Triol und einem Prepolymer. Fügbar nach Aktivierung]

In einem 1000-ml-Glasreaktor mit Stickstoffanschluss wurden 72,6 g eines Polyethertriols auf Propylenoxid-Basis mit einem Molekulargewicht von 6000 und 148,4 g eines Propylenoxid-Diols mit einem Molekulargewicht von 2000 sowie 80,0 g 100%iges Toluylen-2,4-diisocyanat, 2,3 g Antaron V-216, ein Dispergator auf der Basis eines Homopolymers aus 1-Ethenylhexadecyl-2-pyrrolidon mit einem Molekulargewicht von 7300 (Firma ISP Technologies) eingewogen und während 5 Minuten homogenisiert und auf 15 °C gekühlt.

Anschliessend wurden 1,3 g Tributylphosphin als Katalysator zugegeben und das ganze Gemisch unter starkem Rühren bei 15 °C 1 Stunde lang zur Reaktion gebracht. Danach wurden 1,3 g Benzoylchlorid zugegeben und wiederum 15 Minuten zur Reaktion gebracht. Das Gemisch wurde nun mit 7,7 g Octylamin versetzt und wiederum bei 15 °C 15 Minuten lang zur Reaktion gebracht. Dann wurde dem Gemisch 26,4 g Neopentan-Mix (67,1 % eines Di-nonylphtalat-Weichmachers und 32,9 % 2,2-Dimethyl-1,3-diaminopropan) zugegeben und bei 15 °C 15 Minuten lang zur Reaktion gebracht. Anschliessend wurden dem Gemisch 1,0 g Ethylendiamin zugegeben und bei 15 °C 15 Minuten lang zur Reaktion gebracht. Zum Schluss wurden dem Gemisch 29,4 g Jeffamin T-5000 und 629,6 g eines OH-terminierten Prepolymers mit einem Valenzgewicht von 3000 zugegeben und während 20 Minuten bei 15 °C gerührt.

Das in situ mikroverkapselte Polyisocyanat wurde nun entgast und in einem geschlossenen Behalter aufbewahrt. Es war ohne Stickstoffüberlagerung mehrere Wochen stabil. Im DSC (Different Scanning Calorimeter) zeigte es einen exothermen Peak bei 119 °C.

### Beispiel 17

### [Herstellung einer Klebstoffmasse aus der in Beispiel 16 beschriebenen Reaktionsmasse]

Im Labor-Planetenmischer wurden 308,3 g der in Beispiel 16 beschriebenen in situ hergestellten Polyisocyanat-Masse und 23,5 g Russ (Elftex 125) eingewogen und während 5 Minuten bei 1013 mbar (101'300 Pa) und weitere 5 Minuten bei 20 mbar (2000 Pa) eingemischt. Anschliessend wurde belüftet, und es wurden 16,8 g amorphe Kieselsaure (Aerosil R 974) eingewogen und während 5 Minuten bei 1013 mbar (101'300 Pa) gemischt. Danach wurde der Druck auf 20 mbar (2000 Pa) reduziert und 15 Minuten weitergemischt. Anschliessend wurden 1,4 g DBTL (Dibutyl-zinn-dilaurat) als Katalysator eingewogen und während 20 Minuten bei 20 mbar (2000 Pa) gemischt.

Die Klebstoffmasse wurde in eine Kartusche abgefüllt. Der Klebstoff war auch nach einer Lagerung von mehreren Wochen noch pastös. Im DSC (Different Scanning Calorimeter) zeigte er einen exothermen Peak bei 119 °C.

Der Prüfling war nach einer Woche vollständig ausgehärtet. Es ergab sich eine Zugscherfestigkeit von 3,1 MPa.

## Patentansprüche

1. Verfahren zur Herstellung von lagerstabilen Dispersionen von durch oberflächliche Adduktbildung mit primären aliphatischen Polyaminen verkapseltem Toluylendiisocyanat-uretdion, **dadurch gekennzeichnet, dass** man das Verfahren als Eintopfverfahren durchführt, indem man:
(a) monomeres Toluoldiisocyanat in einem Polyol oder einem bezüglich der Isocyanat-Reaktion inerten flüssigen Medium von mässiger Polarität, in welchem das Urethdion praktisch unlöslich ist, bei Temperaturen unterhalb 30 °C in Gegenwart eines Dimerisierungskatalysators zur Reaktion bringt;
(b) darauf den Dimerisierungskatalysator desaktiviert;
(c) darauf das Reaktionsprodukt mit 10 bis 30 Mol-% des eingesetzten Toluoldiisocyanates eines primären Monoamins umsetzt; und
(d) anschliessend mindestens ein primäres Polyamin in einer Menge von 40 bis 80 Mol-%, bezogen auf die freien Isocyanat- Gruppen, zusetzt.

2. Verfahren nach Anspruch 1, **dadurch gekennzeichnet, dass** man das Toluoldiisocyanat in einem bezüglich der Isocyanat-Reaktion inerten Medium zur Reaktion bringt.

3. Verfahren nach Anspruch 2, **dadurch gekennzeichnet, dass** man als bezüglich der Isocyanat-Reaktion inertes Medium einen Weichmacher von mässiger Polarität, in welchem das Urethdion praktisch unlöslich ist und einen Löslichkeitsparameter δ von weniger als 10, vorzugsweise weniger als 9, aufweist, einsetzt.

4. Verfahren nach Anspruch 3, **dadurch gekennzeichnet, dass** man als Weichmacher einen Phthalatweichmacher auf der Basis von mindestens einem Alkohol mit 8 bis 12 Kohlenstoffatomen einsetzt.

5. Verfahren nach Anspruch 1, **dadurch gekennzeichnet, dass** man die Reaktion in einem Polyol mit einem Molekulargewicht von 500 bis 20'000 durchführt.

6. Verfahren nach Anspruch 5, **dadurch gekennzeichnet, dass** man ein Polyol einsetzt, welches ausschliesslich sekundäre Hydroxy-Gruppen aufweist.

7. Verfahren nach Anspruch 6, **dadurch gekennzeichnet, dass** man als Polyol ein Polyetherpolyol einsetzt.

8. Verfahren nach Anspruch 7, **dadurch gekennzeichnet, dass** man ein Polyetherpolyol auf der Basis von Propylenoxyd einsetzt.

9. Verfahren nach einem der Ansprüche 1 bis 8, **dadurch gekennzeichnet, dass** man die Umsetzung des Toluoldiisocyanates bei Temperaturen unterhalb 20 °C durchführt.

10. Verfahren nach Anspruch 9, **dadurch gekennzeichnet, dass** man die Umsetzung des Toluoldiisocyanates bei Temperaturen unterhalb 15 °C durchführt.

11. Verfahren nach einem der Ansprüche 1 bis 10, **dadurch gekennzeichnet, dass** man die Desaktivierung des Dimerisierungskatalysators mittels Benzoylchlorid durchführt.

12. Verfahren nach einem der Ansprüche 1 bis 11, **dadurch gekennzeichnet, dass** man als primäres Monoamin ein Monoamin mit 4 bis 18 Kohlenstoffatomen einsetzt.

13. Verfahren nach Anspruch 12, **dadurch gekennzeichnet, dass** man als primäres Monoamin ein Monoamin mit 6 bis 12 Kohlenstoffatomen einsetzt.

14. Verfahren nach Anspruch 13, **dadurch gekennzeichnet, dass** man als Monoamin n-Octylamin einsetzt.

15. Verfahren nach einem der Ansprüche 1 bis 14, **dadurch gekennzeichnet, dass** man als primäres aliphatisches Polyamin zum überwiegenden Teil ein trifunktionelles Produkt auf der Basis von Polyoxyethylen mit einem Molekulargewicht von 200 bis 600, vorzugsweise von 350 bis 450, einsetzt.

16. Verfahren nach Anspruch 15, **dadurch gekennzeichnet, dass** man während der Umsetzung zusätzlich ein kurzkettiges Diamin, vorzugsweise Ethylendiamin, zusetzt.

17. Verfahren nach Anspruch 15 oder 16, **dadurch gekennzeichnet, dass** man am Schluss zusätzlich ein Polyamin auf der Basis von Polyoxyethylen mit einem Molekulargewicht von mehr als 1000 zugibt.

18. Verfahren nach Anspruch 14, **dadurch gekennzeichnet, dass** man als primäres aliphatisches Polyamin zum überwiegenden Teil ein aliphatisches Diamin mit einem Molekulargewicht von 50 bis 500, vorzugsweise von 80 bis 200, einsetzt.

19. Verfahren nach einem der Ansprüche 1 bis 14, **dadurch gekennzeichnet, dass** man als primäres aliphatisches Polyamin zusatzlich ein aliphatisches Diamin mit einem Molekulargewicht von 50 bis 500, vorzugsweise von 80 bis 200, einsetzt.

20. Verfahren nach Anspruch 19, **dadurch gekennzeichnet, dass** man ein aliphatisches Diamin einsetzt, welches bezüglich mindestens einer Amingruppe sterisch gehindert ist.

21. Verfahren nach Anspruch 17, **dadurch gekennzeichnet, dass** man am Schluss zusätzlich ein Polyamin auf der Basis von Polyoxyethylen mit einem Molekulargewicht von mehr als 3000 zugibt.

22. Verwendung einer Dispersion nach Anspruch 1 zur Herstellung eines lagerstabilen hitzehärtbaren Polyurethan-Klebstoffes oder Polyurethan-Dichtungsstoffes oder einer lagerstabilen hitzehärtbaren Polyurethan-Beschichtungsmasse, **dadurch gekennzeichnet, dass** man die Dispersion mit mindestens einem Polyol und/oder Polyamin mit je einem Molekulargewicht von 1000 bis 20'000 vermischt.

23. Verwendung nach Anspruch 22, **dadurch gekennzeichnet, dass** man ausserdem mindestens einen Katalysator für die Polyurethan-Reaktion zugibt.

24. Verwendung nach Anspruch 22 oder 23, **dadurch gekennzeichnet, dass** man ausserdem Füllstoffe und/oder Additive zugibt.

25. Verwendung nach Anspruch 22, **dadurch gekennzeichnet, dass** man als Polyol einen Polyester und/oder einen Polyether und/oder ein Polycarbonat und/oder ein Polyurethan und/oder Polybutadien und als Polyamin ein Polyether-Polyamin einsetzt.

## Revendications

1. Procédé de préparation de dispersions, stables en magasin, d'uretdione de toluène-diisocyanate, encapsulée par formation, en surface, de produits d'addition avec des polyamines aliphatiques primaires, **caractérisé en ce que** l'on met ce procédé en oeuvre en opérant en un seul récipient, de la manière suivante :
a) on fait réagir du toluène-diisocyanate monomère, à une température inférieure à 30 °C, en présence d'un catalyseur de dimérisation, et dans un polyol ou un milieu liquide modérément polaire et sans influence sur la réaction de l'isocyanate, dans lequel l'uretdione est pratiquement insoluble ;
b) puis on désactive le catalyseur de dimérisation ;
c) puis on fait réagir le produit de réaction avec une monoamine primaire, utilisée en une quantité de 10 à 30 % en moles par rapport au toluène-diisocyanate mis en jeu ;
d) et l'on ajoute enfin au moins une polyamine primaire, en une quantité de 40 à 80 % en moles par rapport aux groupes isocyanate libres.

2. Procédé conforme à la revendication 1, **caractérisé en ce que** l'on fait réagir le toluène-diisocyanate dans un milieu sans influence sur la réaction de l'isocyanate.

3. Procédé conforme à la revendication 2, **caractérisé en ce que** l'on emploie, en tant que milieu sans influence sur la réaction de l'isocyanate, un plastifiant modérément polaire dans lequel l'uretdione est pratiquement insoluble et présente un paramètre de solubilité δ inférieur à 10 et de préférence inférieur à 9.

4. Procédé conforme à la revendication 3, **caractérisé en ce que** l'on emploie, en tant que plastifiant, un plastifiant de type phtalate constitué à partir d'au moins un alcool dont la molécule comporte de 8 à 12 atomes de carbone.

5. Procédé conforme à la revendication 1, **caractérisé en ce que** l'on effectue la réaction dans un polyol dont la masse molaire vaut de 500 à 20 000.

6. Procédé conforme à la revendication 5, **caractérisé en ce que** l'on utilise un polyol qui comporte exclusivement des groupes hydroxyle secondaires.

7. Procédé conforme à la revendication 6, **caractérisé en ce que** l'on emploie comme polyol un polyéther-polyol.

8. Procédé conforme à la revendication 7, **caractérisé en ce que** l'on emploie un polyéther-polyol à base d'oxyde de propylène.

9. Procédé conforme à l'une des revendications 1 à 8, **caractérisé en ce que** l'on fait réagir le toluène-diisocyanate à une température inférieure à 20 °C.

10. Procédé conforme à la revendication 9, **caractérisé en ce que** l'on fait réagir le toluène-diisocyanate à une température inférieure à 15 °C.

11. Procédé conforme à l'une des revendications 1 à 10, **caractérisé en ce que** l'on désactive le catalyseur de dimérisation à l'aide de chlorure de benzoyle.

12. Procédé conforme à l'une des revendications 1 à 11, **caractérisé en ce que** l'on emploie, en tant que monoamine primaire, une monoamine dont la molécule comporte de 4 à 18 atomes de carbone.

13. Procédé conforme à la revendication 12, **caractérisé en ce que** l'on emploie, en tant que monoamine primaire, une monoamine dont la molécule comporte de 6 à 12 atomes de carbone.

14. Procédé conforme à la revendication 13, **caractérisé en ce que** l'on emploie de la n-octylamine en tant que monoamine.

15. Procédé conforme à l'une des revendications 1 à 14, **caractérisé en ce que** l'on emploie en tant que polyamine aliphatique primaire, en majeure partie, un composé trifonctionnel à base de polyoxyéthylène, dont la masse molaire vaut de 200 à 600 et de préférence de 350 à 450.

16. Procédé conforme à la revendication 15, **caractérisé en ce que** l'on ajoute en outre, au cours de la réaction, une diamine à courte chaîne, qui est de préférence de l'éthylènediamine.

17. Procédé conforme à la revendication 15 ou 16, **caractérisé en ce que** l'on ajoute en outre, à la fin, une polyamine à base de polyoxyéthylène, dont la masse molaire vaut plus de 1 000.

18. Procédé conforme à la revendication 14, **caractérisé en ce que** l'on emploie en tant que polyamine aliphatique primaire, en majeure partie, une diamine aliphatique dont la masse molaire vaut de 50 à 500 et de préférence de 80 à 200.

19. Procédé conforme à l'une des revendications 1 à 14, **caractérisé en ce que** l'on emploie en outre, en tant que polyamine aliphatique primaire, une diamine aliphatique dont la masse molaire vaut de 50 à 500 et de préférence de 80 à 200.

20. Procédé conforme à la revendication 19, **caractérisé en ce que** l'on emploie une diamine aliphatique dont au moins l'un des groupes amino est soumis à l'influence d'un encombrement stérique.

21. Procédé conforme à la revendication 17, **caractérisé en ce que** l'on ajoute en outre, à la fin, une polyamine à base de polyoxyéthylène, dont la masse molaire vaut plus de 3 000.

22. Emploi d'une dispersion, préparée conformément à la revendication 1, pour la préparation d'un matériau adhésif, d'un matériau d'étanchéité ou d'un matériau à étaler en couche, en polyuréthane, durcissable sous l'effet de la chaleur et stable en magasin, **caractérisé en ce que** l'on mélange la dispersion avec au moins un polyol et/ou une polyamine qui ont chacun une masse molaire de 1 000 à 20 000.

23. Emploi conforme à la revendication 22, **caractérisé en ce que** l'on ajoute en outre au moins un catalyseur de la réaction de formation de polyuréthane.

24. Emploi conforme à la revendication 22 ou 23, **caractérisé en ce que** l'on ajoute en outre des charges et/ou des adjuvants.

25. Emploi conforme à la revendication 22, **caractérisé en ce que** l'on emploie, en tant que polyol, un polyester et/ou un polyéther et/ou un polycarbonate et/ou un polyuréthane et/ou un polybutadiène, et en tant que polyamine, une polyéther-polyamine.

## Claims

1. Process for preparing storage-stable dispersions of tolylene diisocyanate uretdione encapsulated by surface adduct formation with primary aliphatic polyamines, **characterized in that** the process is carried out as a one-pot process by
(a) reacting monomeric toluene diisocyanate in a polyol or in a liquid medium which is inert with respect to the isocyanate reaction, is of moderate polarity, and in which the uretdione is virtually insoluble, at temperatures below 30°C in the presence of a dimerization catalyst;
(b) subsequently deactivating the dimerization catalyst;
(c) subsequently reacting the reaction product with from 10 to 30 mol% of the toluene diisocyanate used of a primary monoamine; and
(d) thereafter adding at least one primary polyamine in an amount of from 40 to 80 mol%, based on the free isocyanate groups.

2. Process according to Claim 1, **characterized in that** the toluene diisocyanate is reacted in a medium which is inert with respect to the isocyanate reaction.

3. Process according to Claim 2, **characterized in that** the medium used which is inert with respect to the isocyanate reaction is a plasticizer of moderate polarity in which the uretdione is virtually insoluble and which has a solubility parameter δ of less than 10, preferably less than 9.

4. Process according to Claim 3, **characterized in that** the plasticizer used is a phthalate plasticizer based on at least one alcohol having 8 to 12 carbon atoms.

5. Process according to Claim 1, **characterized in that** the reaction is carried out in a polyol having a molecular weight of from 500 to 20 000.

6. Process according to Claim 5, **characterized in that** a polyol is used which contains exclusively secondary hydroxyl groups.

7. Process according to Claim 6, **characterized in that** the polyol used is a polyether polyol.

8. Process according to Claim 7, **characterized in that** a polyether polyol based on propylene oxide is used.

9. Process according to one of Claims 1 to 8, **characterized in that** the reaction of the toluene diisocyanate is carried out at temperatures below 20°C.

10. Process according to Claim 9, **characterized in that** the reaction of the toluene diisocyanate is carried out at temperatures below 15°C.

11. Process according to one of Claims 1 to 10, **characterized in that** the deactivation of the dimerization catalyst is carried out by means of benzoyl chloride.

12. Process according to one of Claims 1 to 11, **characterized in that** the primary monoamine used is a monoamine having 4 to 18 carbon atoms.

13. Process according to Claim 12, **characterized in that** the primary monoamine used is a monoamine having 6 to 12 carbon atoms.

14. Process according to Claim 13, **characterized in that** the monoamine used is n-octylamine.

15. Process according to one of Claims 1 to 14, **characterized in that** as primary aliphatic polyamine use is made predominantly of a trifunctional product based on polyoxyethylene with a molecular weight of from 200 to 600, preferably from 350 to 450.

16. Process according to Claim 15, **characterized in that** during the reaction additionally a short-chain diamine, preferably ethylenediamine, is added.

17. Process according to Claim 15 or 16, **characterized in that** at the end additionally a polyamine based on polyoxyethylene with a molecular weight of more than 1000 is added.

18. Process according to Claim 14, **characterized in that** as primary aliphatic polyamine use is made predominantly of an aliphatic diamine having a molecular weight of from 50 to 500, preferably from 80 to 200.

19. Process according to one of Claims 1 to 14, **characterized in that** as primary aliphatic polyamine use is made additionally of an aliphatic diamine having a molecular weight of from 50 to 500, preferably from 80 to 200.

20. Process according to Claim 19, **characterized in that** an aliphatic diamine is used which is sterically hindered in respect of at least one amine group.

21. Process according to Claim 17, **characterized in that** at the end additionally a polyamine based on polyoxyethylene with a molecular weight of more than 3000 is added.

22. Use of a dispersion according to Claim 1 for preparing a storage-stable heat-curable polyurethane adhesive or polyurethane sealant or polyurethane coating material, **characterized in that** the dispersion is mixed with at least one polyol and/or polyamine having in each case a molecular weight of from 1000 to 20 000.

23. Use according to Claim 22, **characterized in that** additionally at least one catalyst for the polyurethane reaction is added.

24. Use according to Claim 22 or 23, **characterized in that** additionally fillers and/or additives are added.

25. Use according to Claim 22, **characterized in that** the polyol used comprises a polyester and/or a polyether and/or a polycarbonate and/or a polyurethane and/or polybutadiene and the polyamine used comprises a polyether polyamine.
